# EUROPEAN PATENT APPLICATION

(11) **EP 4 808 175 A1**
(43) Date of publication of application: **16.09.2026**
(21) Application number: 25162759.2
(22) Date of filing: 10.03.2025
(51) Int. Cl.: H04W 8/20, H04W 12/30

(54) **METHOD, CONFIGURATION PROGRAM, APPLICATION PROGRAM DATASET, DATA CARRIER, AS WELL AS SERVER DEVICE ADAPTED FOR PERFORMING ENABLED PROFILE DATASET OPERATIONS ON A USER DEVICE, AND SAME**

(71) Applicant: Giesecke+Devrient Mobile Security Germany GmbH, 81677 München (DE)
(72) Inventor: DANDAVATE, Dinanath, 110 020 New Delhi (IN)
(74) Representative: LKGLOBAL Partnerschaftsgesellschaft mbB

(57) **Abstract**

A method, as well as a corresponding configuration program (10), an application program dataset (A), a computer-readable data carrier (11, 12, 13), a user device (5), and a server device (3) are provided, wherein for configuring a user device (5), in particular a mobile device or an IoT device, comprising a secure element (6), such as an eUICC, for identifying a user (U) with at least one associated user profile dataset (P) to allow participation in mobile telecommunication networks (N), the method comprises the steps providing the at least one user profile dataset (P) to the secure element (6); monitoring the at least one user profile dataset (P) to determine if the at least one user profile dataset (P) is an enabled state (E); and sending a status notification (G) to a server device (3), in particular a security server providing a secure location for handling user profile datasets (P), after determining that the at least one user profile dataset (P) is in the enabled state (E), for allowing the server device (3) to remotely carry out at least one profile operation (Q) with the at least one user profile dataset (P).

## Description

### Technical Field

The present disclosure relates to the field of configuring server devices and user devices, for example, smart cards, transaction cards, personal mobile devices or Internet-of-Things (IoT) devices, or alike, for managing remotely triggered operations involving user profile datasets configured to identify respective users for allowing their participation in communication networks. In particular, the present disclosure relates to a method of configuring a user device, in particular a mobile device or an IoT device, comprising a secure element, such as an eUICC, for identifying a user with at least one associated user profile dataset to allow participation in mobile telecommunication networks, a configuration program for a communication system involving user profile datasets adapted to be stored on a secure element, such as an eUICC, of a user device associated to a user and configured to identify the respective user to allow participation in mobile telecommunication networks, an application program dataset for operating a secure element of a user device, such as an eUICC, a computer-readable data carrier, a server device, in particular a security server providing a secure location for handling user profiles for communication via mobile telecommunication networks, and a user device, in particular a mobile device or an IoT device to be configured for communication via mobile telecommunication networks by a user.

### Background of the Invention

User devices, such as personal mobile devices or IoT-devices, as well as smart cards (e.g., so-called java cards), identification cards, transaction cards, etc., are known from the prior art. The user devices are commonly configured to employ electronic subscriber profiles authenticating a user for secure transactions or communicating on telecommunication networks, e.g., mobile networks. Therefore, user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles, in the form of respective user profile datasets, that may allow the user devices to connect to one or more mobile networks.

A subscriber profile (e.g., an eSIM profile) may be generated by a mobile network operator (MNO) on a server device, and may be stored, e.g., downloaded from there by a user device. The subscriber profile, or respective user profile dataset, may then be installed on a secure element of the user device and used for communication over a corresponding mobile network by the user device in that they allow for securely identifying the user. Certain ways for installing and deleting user profile datasets on servers or secure elements are known from the prior art.

EP 3 939 344 B1, for example, relates to a method for providing subscription profiles to a subscriber identity module, preferably an eUICC, by means of a subscription server, preferably an SM-DP, wherein: the subscription server has knowledge of a first subscription profile, which is installed in the subscriber identity module, has a first profile file structure and first profile data stored in the first profile file structure; and at least a portion of a second profile file structure of a second subscription profile is flagged in the subscription server and the second subscription profile is sent to the subscriber identity module, the flagged portion of the second subscription profile being sent without second profile data. The first profile in the eUICC may be deleted to ensure that no two profiles with the same subscriber identity data (IMSI, ICCID, OTA key, etc.) are stored in the eUICC.

EP 3 609 208 A1 refers to a Secure Element of a mobile device, comprising at least one subscription profile in a memory and an operating system running on a processor unit, the operating system supporting commands DELETE, UNDELETE and REMOVE executable on profiles stored in memory; the command DELETE executed on a profile effecting the profile to have a DELETED state, wherein a DELETED profile is unselectable or unusable, however remains stored in memory; the command UNDELETE executed on a DELETED profile effecting cancellation of the DELETED state of the profile; the command REMOVE executed on a profile effecting removal of the profile from memory.

WO 2018/165983 A1 relates to an eUICC profile deletion method and device. An eUICC profile deletion method, comprising: receiving an eUICC profile deletion request, the eUICC profile deletion request carrying authentication confirmation information; verifying the authentication confirmation information; in the case where the authentication confirmation information has passed the verification, sending, to the eUICC of a terminal, an instruction to delete the eUICC profile, the instruction to delete the eUICC profile being used for instructing the eUICC to delete the eUICC profile. The proposed embodiments are supposed to reduce the risk of financial losses associated with eUICC data or information leakage associated with eUICC data, after a terminal has been lost.

Methods for configuring user devices, as described above, may not fully satisfy all requirements regarding profile management, in particular, when in the field, i.e., after commencing operation of respective user devices provided with the secure elements, certain profile operations are supposed to be carried out, such as downloads, deletions, disablement, enablement, etc. A respective server device, such as a profile server, for example an SM-SR, may attempt to carry out such operations but is unaware of the profile status. However, the attempt may be futile if the server device is not in control or at least aware of an operational status of the user profile dataset, in particular, when the user profile dataset is not reachable through remote communication, such as if a user device in the form of an automobile provided with a secure element is only operated temporarily. Repeatedly attempting these futile operations may in turn lead to undesired workloads on the side of the server device and respective communication networks.

### Summary of the Invention

It may be seen as an object to improve the interaction between the user devices and/or their secure elements when performing profile operations controlled by respective server devices. In particular, it may be seen as an object to provide a way to consider an operational status of a user profile dataset, such that on the one hand, convenient operation, versatility, and availability, as well as on the other hand, sufficient functional capacity, safety, and security of the involved servers and user devices can be provided in a satisfactory manner. These objects are at least partly achieved by the subject-matter of the independent claims.

According to an aspect, a method of configuring a user device, in particular a mobile device or an IoT device, comprising a secure element, such as an eUICC, for identifying a user with at least one associated user profile dataset to allow participation in mobile telecommunication networks, is provided, the method comprising the steps of providing the at least one user profile dataset to the secure element; monitoring the at least one user profile dataset to determine if the at least one user profile dataset is an enabled state; and sending a status notification to a server device, in particular a security server providing a secure location for handling user profile datasets, after determining that the at least one user profile dataset is in the enabled state, for allowing the server device to remotely carry out at least one profile operation with the at least one user profile dataset.

According to an aspect, a configuration program for a communication system involving user profile datasets adapted to be stored on a secure element, such as an eUICC, of a user device associated to a user and configured to identify the respective user to enable access mobile telecommunication networks, is provided, wherein the configuration program comprises instructions which, when the configuration program is executed by a server device, a user device, and/or a secure element, cause the server device, the user device, and/or the secure element to carry out a corresponding method.

According to an aspect, an application program dataset for operating a secure element of a user device, such as an eUICC, is provided, wherein the application program dataset is configured to cause the user device and/or the secure element to carry out a corresponding method and/or configured with a corresponding configuration program.

According to an aspect, a computer-readable data carrier is provided, having stored thereon a corresponding configuration program and/or a corresponding server program dataset.

According to an aspect, a server device, in particular a security server providing a secure location for handling user profiles for communication via mobile telecommunication networks, is provided, wherein the server device is configured to carry out a corresponding method, comprises a corresponding configuration program, a corresponding server program dataset and/or a corresponding computer-readable data carrier.

According to an aspect, a user device, in particular a mobile device or an IoT device to be configured for communication via mobile telecommunication networks by a user, is provided, wherein the user device is configured to carry out a corresponding method, comprises a corresponding configuration program, a corresponding application program dataset and/or a corresponding computer-readable data carrier.

Each user profile dataset can be installed on a respective secure element and may include security credentials configured for accessing at least one mobile telecommunication network. Further user profile datasets can be provided for accessing the at least one further mobile telecommunication networks. User profile datasets can comprise respective diversified data configured for accessing the at least one mobile telecommunication network and the at least one further mobile communication network.

The server program dataset may at least in part be provided on the server device and can be configured to interact with the server device and/or at least one hardware security module (HSM) thereof. In other words, the server program dataset may at least partly run on the server device, for example, as a part of a server system dataset configured to operate the server device. Additionally, an administration program dataset can be provided for installing and/or managing the server program dataset, such as for installing and/or updating the server program dataset or respective update data subsets, including the database. Both, the administration program dataset and the server program dataset may be integrated as data subsets into a customer specific dataset, such as a software suite allowing for customization of data on the server device as described herein.

The application program dataset may at least in part be provided on the secure element and can be configured to interact with the user device and/or at least one network terminal thereof. In other words, the application program dataset may at least partly run on the secure element, for example, as a part of an operating system dataset configured to operate the secure element. Additionally, an installation program dataset can be provided for installing and/or managing the application program dataset, such as for installing and/or updating an operating system dataset or respective update data subsets, including the application program dataset. Both, the installation program dataset and the installation program dataset may be integrated as data subsets into a customization dataset, such as a firmware suite allowing for customization of data on the secure element as described herein.

The application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The proposed solution allows for generally improving the interaction between the user devices, their secure elements and/or server devices in managing user profiles. In particular, it can be refrained from attempting to carry out profile operations with potentially disabled and possibly unused profiles, in particular in set-ups involving large numbers of user profiles, such that on the one hand, convenient operation, versatility, and availability, as well as on the other hand, sufficient functional capacity, safety, and security of the involved servers and user devices can be provided in a satisfactory manner. The proposed solution thus has the advantage over the prior art, that it provides way to detect whether the user device and/or secure element is running and connected to respective mobile telecommunication network, in order to be able to successfully trigger and perform at least one profile operation in an efficient and well-organized manner.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment of a method, the status notification contains at least one profile identifier of the at least one user profile dataset. For example, an ISD-P-AID may be used on the side of the secure element and/or an ICCID may be used on the side of the server device as respective profile identifier. This further helps in handling databases and/or secure elements containing respective user profile datasets in an efficient and well-organized manner.

According to an embodiment of a method, the step of monitoring the at least one user profile dataset involves assessing an operational time interval between a last usage time point and a current time. The operational time interval may reflect a current usage or usage patterns of the at least one user profile dataset. This further helps in handling and managing operational statuses of user profile datasets, in particular in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the status information contains at least one location parameter for geolocating the user device and/or the secure element. The location parameter may comprise at least one geographic coordinate of the user device and/or the secure element. Based on such a geographic coordinate, the current time may be determined for the user device and/or the secure element, sample, based on a respective time zone. This additionally helps in handling and managing operational statuses of user profile datasets, in particular in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the step of determining that the at least one user profile dataset is the enabled state is carried out after powering up the user device and/or the secure element. For example, the respective status notification may be sent to the server device after powering up the user device and/or secure element. In the course of powering up the user device and/or secure element, the at least one user profile dataset may be (re-)activated to be brought into the enabled state. It may be assumed that specifically after powering up the user device and/or secure element, the at least one user profile dataset may remain in the enabled state, and therefore possibly connected to mobile telecommunication network for a time span which is sufficiently long to carry out the at least one profile operation. This can further help in handling and managing user profile datasets, in particular in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the method further comprises the steps of implementing a status count value to be incremented for each status notification sent to the server device until the status count value reaches a pre-defined threshold value. A respective count number can be implemented and/or first incremented upon enabling the at least one user profile. In turn, when the user profiles and a disabled state, it may not be used to provide respective status messages. The resulting limitation of status counts on the side of the server device, for example, by letting the server device counter received status notifications, can help to assess and manage usage pattern of the at least one user profile dataset. This additionally helps in handling databases and/or secure elements containing respective user profile datasets in an efficient and well-organized manner.

According to an embodiment of a method, the method further comprises the step of incrementing the status count value upon sending the status notification with the secure element regarding the status of the at least one user profile dataset. In other words, the secure element may keep track of the number of status notifications sent and/or attempted to be sent. For example, the status commands may be sent in pre-defined time intervals, such as every 5, 10, 15, 30, 60 and/or 120 minutes. The incremented status count value thus reflects a time value, such as a timespan, during which their respective user profile dataset in use. This may further help in handling and managing user profile datasets, in particular in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the method further comprises the step of resetting the status count value when it is being assessed that the at least one user profile dataset is being continuously used after sending a previous status notification to the server device and/or after a last power up of the user device and/or the secure element. For example, the status count value may be reset to a pre-defined initial value, such as 0. This provides a simple, yet reliable and efficient way to manage and monitor operational states and respective operational time spans of user profile datasets.

According to an embodiment of a method, the method further comprises the step of sending a reset command from the server device to the user device and/or the secure element for resetting the status count value. For example, the server device may initiate a reset of the status count upon successfully carrying out a desired and/or required profile operation. A successful execution of the desired and/or required profile operation can be confirmed by the user device and/or the secure element, for example, by sending a respective status notification or response message to the server device. This may additionally help in handling and managing user profile datasets, in particular in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the method further comprises the step of sending a termination command from the server device to the user device and/or the secure element for terminating and/or sending an initialization command to the user device and/or the secure element for initializing a provision of status notifications regarding the at least one user profile dataset. After receiving the termination command, the server device and/or the secure element may regard the at least one user profile dataset operator will in a manner that, at least for a time being, no further profile operations are necessary. In turn, an initialization command can trigger the secure element and/or the user device to provide a static notification, for example, if the profile operation scheduled to be carried out. This helps in adapting computational effort as well as network traffic to the respective requirements, for example, by limiting efforts made on the side of the server device and such are of the user device, and thus helps in handling and managing user profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

### Brief Description of the Drawings

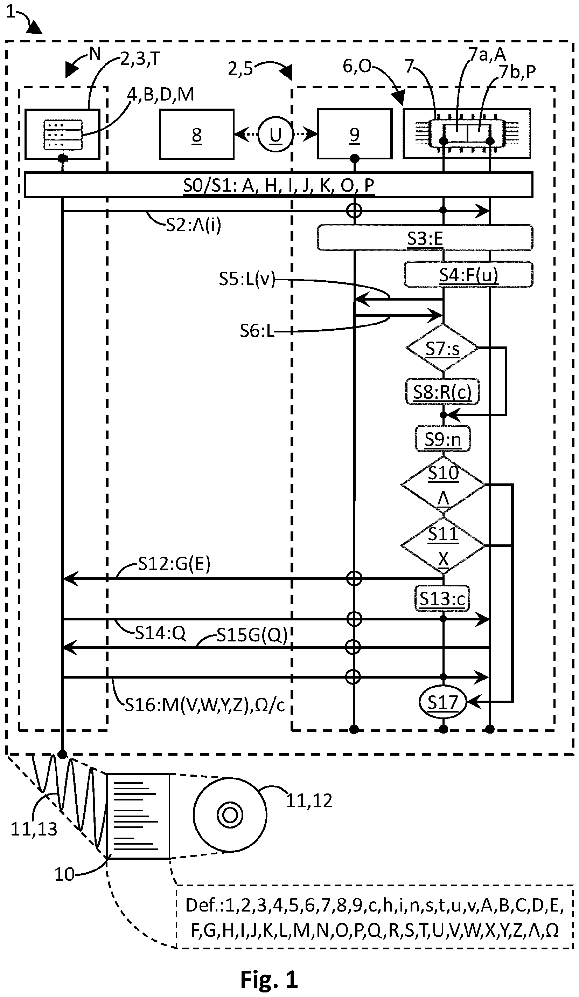

- Fig. 1: is a schematic exemplary illustration of a communication system configured for carrying out a method according to the present invention.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

Fig. 1 shows an schematic illustration of an example of a communication system 1 comprising a computing device 2, for instance, in the form of a server device 3 controlled by a trusted entity T, which can include a hardware security module 4 adapted to store, manage and/or provide application program dataset A, operating system datasets O and/or user profile datasets P for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+) and/or for Subscription Manager Secure Routing (SM-SR).

The server device 3 and/or the hardware security module 4 may be operated by means of a respective server program dataset B which may involve routine server processes. A database D containing an administered set M of user profile datasets P can be administered by means of the server device 3 and/or the hardware security module 4. The administered set M of user profile datasets P can be any set of user profile datasets P that is being managed by the respective trusted entity T or at least a part of the entirety of managers a proper datasets P, for example, specific user proper datasets P intended for a certain application, customer, and/or mobile communication network N. At least a part of the user profile datasets P may be user profile datasets P which may have to undergo a specific profile operation Q, such as data downloads (profile updates, operation system updates, application updates, etc.), deletions, disablement, enablement.

In the present example, the user devices 5 may be adapted for secure operation, transactions and/or communication, e.g., via a mobile telecommunication networks N by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location 7 may provide different memory regions, such as at least one first memory region 7a and at least one second memory region 7b.

The at least one user profile dataset P is associated to a respective user U, can be configured according to respective diversified data, such as security credentials H, a profile identifier I, authentication certificates H, and/or security keys K to allow access at least one mobile telecommunication network N and/or a data object. The at least one user profile P, diversified data, and/or data object can have a predefined data format as required for participating in the mobile telecommunication networks N, and can be stored in respective memory regions 7a, 7b of the secure storage location 7. By accessing the telecommunication networks N, the user may be provided with respective network services and/or access to data objects. For example, a mobile telecommunication network N may be a public network (PN). Further mobile telecommunication networks N may be a non-public network (NPN), such as a private network of a certain government, non-government institution, e.g., schools, colleges, government agencies, departments, and universities, or alike, and/or private companies, service providers, etc.

A management application 8 may be provided which can be configured to allow the user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the eIM, for instance, by means of respective profile operations Q. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6.

Furthermore, the operating system dataset O may comprise and/or may be configured to interact with an application program dataset A, the at least one user profile P and/or security credentials H, including the profile identifiers I, authentication certificates J and/or security keys K. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the application program dataset A, the server program dataset B, the security credentials H, the diversified data, the at least one profile dataset P, the operating system dataset O, the profile identifiers I, and/or the authentication certificates J, the security keys K, and/or any component thereof. The authentication certificates J may be any kind of electronic certificate, for example, that can be issued by the trusted entity T, for authenticating an origin of the user devices 5, the secure elements 6, the secure storage location 7, the application program dataset A, the server program dataset B, the security credentials H, the diversified data, the security keys K, the operating system dataset O, the at least one user profile dataset P, the profile identifiers I, and/or any component thereof.

In any of the embodiments of the communication system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the configuration program 10. Parameters associated with and/or underlying the communication system 1, any of the components thereof and/or any steps S carried out thereby, can be defined in and/or by the configuration program 10.

For carrying out the steps S, the configuration program 10 may provide and/or define respective command messages, such as status commands C which can be configured to interact with the user devices 5, the secure elements 6, the secure storage location 7, the application program dataset A, the security credentials H, the diversified data L, the operating system dataset O, the at least one profile dataset P, the profile identifiers I, the mobile telecommunication networks N and/or any component thereof. Transmission lines (not shown) may be provided for handling and/or transferring any of the above data components and/or data objects, for example, via mobile telecommunication networks N as parts thereof or elements connected thereto. Therefore, the mobile telecommunication networks N may comprise any kind of wired and/or wireless transmission and/or broadcasting chains or lines, including the Internet (for transmissions "Over-The-Air") as well as other physical and/or non-physical data carriers, which can be configured and secured as desired and required by the communication system 1 and its components for carrying out any of the steps S as described herein.

In a first step S1, the server device 3 may provide any of the data components of the configuration system 1, including the operating system dataset O, possibly along with the application program dataset A, respective diversified data L and/or at least one user profile P associated with the user U, to the secure element 6 of the user device 5, for example through the communication interface 9 to be stored in the secure storage location 7 for deployment to the user U. The at least one user profile P may be created based upon respective diversified data kept in the database D for the respective user U. In particular, certain security credentials H may have a high or even the highest security level conceivable for the secure element 6. Any of these components may be provided as enable access to data objects, such as electronic load files (ELF), data blobs, or alike.

In the present example, the data provision and step 1 can be associated with a pre-issuance condition of the user device 5 and/or the secure element 6. Any of the steps taking place after the activation process in step 2 can be associated with a post-issuance condition of the user device 5 and/or the secure element 6. Providing an installation program dataset to the user device 5 and/or the secure element 6 can therefore be regarded as a zeroth step S0 which may take place in a factory and/or manufacturing facility before the first step S1 of providing data to the user device 5 and/or the secure element 6. For example, the application program dataset A may be installed in the first memory region 7a, and the user profile dataset P may be installed and the second memory region 7b.

In a second step S2, the secure element 6 may be instructed to provide status notifications G regarding an operational state of the at least one profile data set P, for example, by sending a respective initialization command A to the secure element 6 through the communication interface 9. The respective initialization time point i or a corresponding timestamp may be provided to the server device 3, the user device 5, and/or the secure element 6. In a third step S3,

the user device 5 and/or secure element 6 may be powered up, and/or the at least one user profile dataset may be put in an enabled state E, for example, it there was a power down and/or disablement after receiving the initialization command A. The application program dataset A may be provided with an/or generate information regarding the operational state of the user profile dataset P, such as, whether the user profile dataset P is in an enabled state E or in a disabled state F.

In a fourth step S4, the application program dataset A may determine a last usage time point u of the at least one user profile dataset P, for example, a time point where the at least one user profile dataset P has been used before transferring it into a disabled state F, possibly by powering off the user device 5 and social secure element 6. The last usage time point u may be stored in a respective memory region 7a, 7b, by the application program dataset A, preferably a nonvolatile memory (NVM) region. Alternatively, or additionally, the last usage time point u may also be set to 0 upon enabling the at least one user profile dataset P.

In a fifth step S5, the secure element 6 can query the user device 5 regarding its current location parameter L, for example, after a certain time interval v and/or after every power up, reboot, or alike. In response to the query and/or automatically upon expiry of a certain time interval v, in a sixth step S6, the user device 5 can provide the secure element 6 with the location parameter L, such as a geographic coordinate, e.g., GPS data, or alike. In a seventh step S7, the secure element 6 may determine, whether the current time h is the last usage time point u, or at least near the last usage time point u within a respective time interval v, to then proceed with an eighth step S8. If not, a timespan s between the last usage time point u and the current time h may be calculated, to then proceed with a ninth step S9.

In the eighth step S8, a reset command R can be used for resetting the status count value c, for example, by resetting it to 0. Thereby, it is indicated that the at least one user profile dataset P remained in usage, since the last usage time point u coincides with or is least close to the current time h. Alternatively, in the ninth step S9, the current status count value c can be retrieved. If then in a tenth step S10, is being determined that status notifications G are to be sent, for example by determining that a respective initialization command A is at hand, it can be further proceeded to an eleventh step S11. Otherwise, if no status notifications G are to be sent, for example by assessing that a respective initialization command A is not at hand, the procedure can be terminated in a seventeenth step S17.

In the eleventh step S11, the secure element 6, in particular the application program dataset A, can determine whether the count number n of the status count value c indicating a number of status notifications G sent to the server device 3 is reached a respective threshold value X. If it is being determined that the count number n has not yet reached the threshold value X, it may be further proceeded with a twelfth step S12. Otherwise, if the count number n has reached asset or exceeded the threshold value X, the procedure can be terminated in the seventeenth step S17. Thereby, it can be avoided that an unnecessary number of status notifications G is provided to the server device 3, for example, enabling that after power up and/or receiving the initialization command A, only a limited number of status notifications G are provided.

In the twelfth step S12, the status notification G regarding the enabled state E of the at least one is a dataset P can be sent from the secure element 6, in particular the application program dataset A, to the server device 3. In a thirteenth step S13 the status count value c may be increased by to a respective new count number n. In a fourteenth step S14, the profile operation Q can be carried out with an/or by means of the at least one user profile dataset P. In a fifteenth step S15, for example, if the at least one profile operation Q has been successfully carried out, and respective status notification G or response message can be sent from the secure element 6 to the server device 3. According to the present example, any of the status notifications G can be sent to the server device 3, such as an SM-SR, either via SMS, HTTP, and/or by using existing protocols mentioned in SGP.02 specification.

In a sixteenth step S16, the server device S3 may manage and/or update the administered set M of user profile data sets P, for example, in that based on respective profile identifiers I, user profile data sets P are listed and/or provided with operation tags Y indicating that a profile operation Q has to be carried out and/or non-operation tags Z indicating that currently, no profile operation is necessary. Accordingly, the user profile datasets P can be grouped in subsets of handle profiles V and subsets of handle profiles W. Alternatively or additionally, the termination command Ω and/or a command for setting the status count value c can be sent from the server device 3 to the user device 5 and/or secure element 6, either via SMS, HTTP, and/or by using existing protocols mentioned in SGP.02 specification.

The termination command termination command Ω can cause the secure element 6, in particular the application dataset A, to pause or finish any provision of status notifications G, at least regarding an enabled state E and/or disabled state F of the at least one user profile dataset P. The termination command Ω and/or an additional command may be used to set the status count value c and/or the threshold value X to a respective number for example, a count number n of status counts to be awaited before re-commencing with the procedure of providing status notifications G. Respective default count value c and/or threshold value X can be set to a number or any multiplication number of 10, 20, 50, 100, 1000, or alike. Finally, in the seventeenth step 17, the procedure may be at least temporarily terminated.

According to the present exemplary embodiments, the application program dataset A may be provided in the form of a pre-installed for M2M communications, that can have a respective configuration for implementing the status count value c and/or time span s, or alike, by which upon reaching a respective threshold value X, the secure element 6 can notify the server device 3 that the respective profile dataset and/or its profile identifier I, such as an AID, may be deleted. Whenever a new profile dataset is being installed/downloaded in the disabled state F, the application program dataset A can start counting status commands, time increments, or alike.

If a profile dataset gets "Enabled", a respective counter can be reset to 0 and can be restarted up and again disabling may re-start a respective counter, for example, after checking a POL1 enforcement by the secure element 6, such as an eUICC.

The example embodiments provide a way to inform the server device 3, once the secure element 6, such as an eUICC, is up and after certain status command G, the application program dataset A, e.g., an applet. can send a status notification G to the server device, indicating that the at least one user profile dataset P is in the enabled stat ("eUICC is up"). Upon receiving notification in the server device 3, it can be assumed that user device 5 will be online for certain period. Even it cannot be guaranteed that after that required/requested operation will be performed either successfully or not, it can be ensured that the secure element 6 is up to perform operations. For example, the following types of status notifications G can be used (in line with GSMA-coding, e.g., by adapting notification types in SGP.02):
- '01': eUICC declaration - First network attachment
- '02': Profile change succeeded
- '03': Profile change failed and Roll-back
- '04': Void
- '05': Profile change after Fall-back activation
- '06': eUICC is up

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: communication system
- 2: computing device
- 3: server device
- 4: hardware security module
- 5: user device
- 6: secure element
- 7: secure storage location
- 7a: first memory region
- 7b: second memory region
- 8: remote management application
- 9: communication interface / modem
- 10: configuration program
- 11: computer-readable data carrier
- 12: computer-readable medium
- 13: data carrier signal

- c: status count value
- h: current time
- i: initialisation time point
- n: count number
- s: time span
- t: time value
- u: last usage time point
- v: time interval

- A: application program dataset
- B: server program dataset / routine server process
- C: status command / command message
- D: data base
- E: enabled state
- F: disabled state
- G: status notification / response message / status response
- H: security credentials
- I: profile identifier
- J: authentication certificate
- K: security key
- L: location parameter
- M: administered set
- N: mobile telecommunication network
- O: operating system dataset
- P: user profile dataset
- Q: profile operation
- R: reset command / request
- S: step
- T: trusted entity
- U: user
- V: subset of handled profiles
- W: subset unhandled profiles
- X: threshold value
- Y: operation tag
- Z: non-operation tag

- A: initialisation command
- Ω: termination command

- S0: set-up/issuance
- S1: provide data
- S2: provide initialization command
- S3: power up and/or enabling profile
- S4: determine usage time point
- S5: query location parameter
- S6: provide location parameter
- S7: determine current time
- S8: provide reset command
- S9: retrieve status count value
- S10: determine notification status
- S11: check status count threshold
- S12: provide status notification
- S13: increase status count number
- S14: perform profile operation
- S15: confirm profile operation
- S16: manage database/send termination command/determine status counter
- S17: end/terminate procedure

## Claims

1. Method of configuring a user device (5), in particular a mobile device or an IoT device, comprising a secure element (6), such as an eUICC, for identifying a user (U) with at least one associated user profile dataset (P) to allow participation in mobile telecommunication networks (N), the method comprising the steps of
providing the at least one user profile dataset (P) to the secure element (6);
monitoring the at least one user profile dataset (P) to determine if the at least one user profile dataset (P) is an enabled state (E); and
sending a status notification (G) to a server device (3), in particular a security server providing a secure location for handling user profile datasets (P), after determining that the at least one user profile dataset (P) is in the enabled state (E), for allowing the server device (3) to remotely carry out at least one profile operation (Q) with the at least one user profile dataset (P).

2. Method according to claim 1, wherein the status notification (G) contains at least one profile identifier (I) of the at least one user profile dataset (P).

3. Method according to claim 1 or 2, wherein the step of monitoring the at least one user profile dataset (P) involves assessing an operational time interval (v) between a last usage time point (u) and a current time (t).

4. Method according to at least one of claims 1 to 3, wherein the status information (G) contains at least one location parameter (L) for geolocating the user device (5) and/or the secure element (6).

5. Method according to at least one of claims 1 to 4, wherein the step of determining that the at least one user profile dataset (P) is the enabled state (E) is carried out after powering up the user device (5) and/or the secure element (6).

6. Method according to at least one of claims 1 to 5, further comprising the steps of implementing a status count value (c) to be incremented for each status notification (G) sent to the server device (3) until the status count value (c) reaches a pre-defined threshold value (X).

7. The method according to at least one of claim 6, further comprising the step of incrementing the status count value (c) upon sending the status notification (G) with the secure element (6) regarding the status of the at least one user profile dataset (P).

8. Method according to claim at least one of claim 6 or 7, further comprising the step of resetting the status count value (c) when it is being assessed that the at least one user profile dataset (P) is being continuously used after sending a previous status notification (G) to the server device (3) and/or after a last power up of the user device (5) and/or the secure element (6).

9. Method according to claim at least one of claims 6 to 8, further comprising the step of sending a reset command (R) from the server device (3) to the user device (5) and/or the secure element (6) for resetting the status count value (c).

10. Method according to at least one of claims 1 to 9, further comprising the step of sending a termination command (Ω) from the server device (3) to the user device (5) and/or the secure element (6) for terminating and/or sending an initialisation command (A) to the user device and/or the secure element for initialising a provision of status notifications (G) regarding the at least one user profile dataset (P).

11. Configuration program (10) for a communication system (1) involving user profile datasets (P) adapted to be stored on a secure element (6), such as an eUICC, of a user device (5) associated to a user (U) and configured to identify the respective user () to allow participation in mobile telecommunication networks (N), wherein the configuration program (10) comprises instructions which, when the configuration program (10) is executed by a server device (3), a user device (5), and/or a secure element (6), cause the server device (3), the user device (5), and/or the secure element (6) to carry out a method of at least one of claims 1 to 10.

12. Application program dataset (A) for operating a secure element (6) of a user device (5), such as an eUICC, wherein the application program dataset (A) is configured to cause the user device (5) and/or the secure element (6) to carry out a method according to at least one of claims 1 to 10 and/or configured with a configuration program (10) according to claim 11.

13. Computer-readable data carrier (11, 12, 13) having stored thereon a configuration program (10) according to claim 11 and/or an application program dataset (A) according to claim 12.

14. Server device (3), in particular a security server providing a secure location for handling user profiles (P) for communication via mobile telecommunication networks (N), wherein the server device (4) is configured to carry out a method according to at least one of claims 1 to 10, comprises a configuration program (10) according to claim 11, a corresponding server program dataset (B) and/or a computer-readable data carrier (11, 12, 13) according to claim 13.

15. User device (5), in particular a mobile device or an IoT device to be configured for communication via mobile telecommunication networks (N) by a user (U), wherein the user device (5) is configured to carry out a method according to at least one of claims 1 to 10, comprises a configuration program (10) according to claim 11, an application program dataset (A) according to claim 12 and/or a computer-readable data carrier (11, 12, 13) according to claim 13.
